# EUROPÄISCHE PATENTANMELDUNG

(11) **EP 1 022 190 A2**
(43) Veröffentlichungstag der Anmeldung: **26.07.2000**
(21) Anmeldenummer: 00101178.2
(22) Anmeldetag: 21.01.2000
(51) Int. Cl.: B60R 1/12

(54) **Rückspiegel**

(30) Priorität: 22.01.1999 DE 19902487
(71) Anmelder: MEKRA Lang GmbH & Co. KG, 90765 Fürth (DE)
(72) Erfinder: Lang, Heinrich, 91465 Ergersheim (DE); Renner, Christopher, 91472 Ipsheim (DE); Seiboth, Wolfgang, 91438 Bad Windsheim (DE)
(74) Vertreter: Winter, Brandl, Fürniss, Hübner, Röss, Kaiser, Polte Partnerschaft

(57) **Zusammenfassung**

Beschrieben wird ein Rückspiegel (2), insbesondere für Kraftfahrzeuge, bei dem in Draufsichtrichtung hinter der Spiegelscheibe (6) wenigstens ein strahlungsemittierendes Anzeigeelement (8) angeordnet ist, welches durch die Spiegelscheibe (6) emittiert. Das Anzeigeelement (8) kann Licht im sichtbaren oder im infraroten Bereich emittieren und ist bevorzugt eine Leuchtdiode (10) oder eine Siebensegmentanzeige. Der Gegenstand der vorliegenden Erfindung kann beispielsweise mit einer sogenannten Rückfahrhilfe kombiniert werden, wobei dann das oder die Anzeigeelemente (8) Abstandsdaten oder -anzeigen zwischen Fahrzeugheck und einem Hindernis oder Rangierziel im Spiegel anzeigen.

## Beschreibung

Die Erfindung betrifft einen Rückspiegel, insbesondere für Kraftfahrzeuge, nach dem Oberbegriff des Anspruches 1.

Es ist bekannt, Fahrzeuge mit sogenannten Rückfahrhilfen auszustatten, welche einen oder mehrere Sensoren, beispielsweise auf Ultraschallbasis, am Heck des Fahrzeuges, sowie eine mit den Sensoren verbundene Auswerte- und Anzeigevorrichtung im Cockpit oder Fahrerstand aufweisen. Insbesondere bei großen Nutzfahrzeugen wie Aufleger-Lkws, Sattelschleppern oder dergleichen stellen derartige Rückfahrhilfen beim Rückwärts-Rangieren des Fahrzeuges für den Fahrer eine große Hilfe dar, da mit ihrer Hilfe der Abstand des Fahrzeughecks zu einem Hindernis oder einem Rangierziel, beispielsweise einer Laderampe, angezeigt werden kann. Der oder die Sensoren im Fahrzeugheck erfassen den Abstand zu einem Hindernis oder dem Rangierziel und dieser Abstand wird auf der Anzeigevorrichtung im Cockpit oder Fahrerstand entweder direkt in Metern und Zentimetern mittels einer Siebensegmentanzeige dargestellt, oder die Anzeige weist eine oder eine Mehrzahl von vorzugsweise verschiedenfarbigen Signallampen (LEDs) auf, mittels denen der Abstand zu einem Hindernis oder dem Rangierziel in bestimmten Inkrementen angezeigt wird. Zusätzlich können auch noch akustische Signale erzeugt werden.

Beim Rückwärtsrangieren von Fahrzeugen, insbesondere von großen Nutzfahrzeugen ist der Fahrer in großem Maße auf die Informationen angewiesen, welche ihm über den oder die Außen-Rückspiegel vermittelt werden. Mit Hilfe der in der Regel beidseitig am Fahrzeug angebrachten Rückspiegel ist der Fahrer in der Lage, das Fahrzeug im Rückwärtsgang - entsprechendes Können und entsprechende Erfahrung vorausgesetzt - sicher zu manövrieren. In Verbindung mit einer Rückfahrhilfe der beschriebenen Art lassen sich auch sehr große, nach hinten hin unübersichtliche Fahrzeuge sicher manövrieren.

Nachteilig hierbei ist allerdings, daß während des Manövriervorganges unter Zuhilfenahme der beiden Rückspiegel und der Rückfahrhilfe der Blick des Fahrers ständig zwischen einem der beiden Rückspiegel bzw. beiden Rückspiegeln und der beispielsweise im oder auf dem Armaturenbrett angeordneten Anzeige der Rückfahrhilfe hin- und herwandern muß. Dies stört die Konzentration und auch die Wahrnehmungsgenauigkeit in dem oder den Rückspiegeln und an der Rückfahrhilfe-Anzeige. Letzteres ist insbesondere dann signifikant, wenn stark unterschiedliche Helligkeitsverhältnisse zwischen dem Bild im Rückspiegel und der Anzeige der Rückfahrhilfe vorliegen, da das Auge stets eine gewisse Zeitdauer benötigt, um einen Hell-Dunkel-Wechsel bzw. Dunkel-Hell-Wechsel im Sichtfeld verarbeiten (adaptieren) zu können. Weiterhin liegen das Bild im Rückspiegel und die Anzeige der Rückfahrhilfe in der Regel in unterschiedlichen Entfernungen, so daß das Auge bei den ständigen Blickwechseln eine gewisse Akkomodationszeit benötigt. All diese Faktoren tragen dazu bei, daß beim Rückwärtsrangieren unter Zuhilfenahme der Außenspiegel und der Anzeige einer Rückfahrhilfe vom Fahrer des Fahrzeuges trotz der Unterstützung durch die Rückfahrhilfe hohes Können und hohe Konzentration verlangt werden.

Man hat daher bereits vorgeschlagen, entsprechende Anzeigeelemente von beispielsweise Rückfahrhilfen hinter der Spiegelscheibe im Rückspiegelgehäuse derart anzuordnen, daß sie durch die Spiegelscheibe hindurch emittieren. Hierdurch liegen Anzeigeelement(e) und Spiegelbild(er) im wesentlichen in einer Ebene und in der gleichen Blickrichtung. Zumindest die oben genannten Akkomodationsprobleme sind hierdurch weitestgehend beseitigt. Auch muß der Blick des Fahrers nicht mehr zwischen Rückspiegel und Armaturenbrett hin- und herwandern, so daß konzentrierteres Lenken und Fahren möglich ist.

Hierzu ist es bekannt, ein dichroitisches Spiegelmaterial zu verwenden, also eines Spiegelmaterials, welches Licht in einem bestimmten Wellenlängenbereich weitestgehend ungehindert passieren läßt, Licht ober- und unterhalb dieses Wellenlängenbereiches jedoch im wesentlichen reflektiert. Werden hinter einer derartigen dichroitischen Spiegelfläche Anzeigeelemente angeordnet, welche in dem gegebenen Wellenlängenbereich emittieren, können diese Anzeigeelemente durch die an sich reflektierende Spiegelfläche hindurch sichtbar gemacht werden.

Die US-A-5,014,167 verwendet einen durchgehenden halbtransparenten dichroitischen Spiegel mit dahinter angeordneten lichtemittierenden Elementen. Gleichzeitig zeigt diese Druckschrift jedoch auch den diesen dichroitischen Spiegeln inhärenten Nachteil, nämlich daß aufgrund des engbandigen Transmissionsbereiches eines dichroitischen Spiegels nur Anzeigeelemente einer ganz bestimmten Farbe (d.h. Wellenlänge) verwendet werden können; ist eine andere Farbe der Anzeigeelemente gewünscht, muß ein anderes dichroitisches Spiegelmaterial verwendet werden. Hieraus ergibt sich der Nachteil, daß mehrfarbige Anzeigen mit einem derartigen dichroitischen Spiegelmaterial nicht realisierbar sind.

Ähnlich verhält es sich bei der WO-A-94/09508. Hier ist nicht mehr die gesamte Spiegelfläche dichroitisch, sondern nur ein vor dem Anzeigeelement liegendes Fenster.

Aus der US-A-4,588,267 ist es bekannt, ein klares, d.h. voll durchlässiges Fenster in der Spiegelschicht eines Spiegels auszubilden, beispielsweise aus der Reflexionsschicht herauszuätzen bzw. die Reflexionsschicht auf dem Glassubstrat so abzuscheiden, daß von vorne herein ein ausgesparter fensterartiger Transmissionsbereich verbleibt, so daß ein Anzeigeelement sicht- und ablesbar ist, wenn es hinter dem Spiegel bzw. dem in der dortigen Spiegelschicht herausgeätzten Fenster angeordnet ist. Durch die weitestgehend ungestörte und uneingeschränkte Durchlässigkeit im Bereich des Fensters in der Spiegelschicht, die nicht auf ein enges Wellenlängenband beschränkt ist, lassen sich bei der US-A-4,588,267 auch verschiedenfarbige Anzeigeelemente verwenden.

Nachteilig bei dem Rückspiegel gemäß der US-A-4,588,267 ist jedoch, daß die vollständige Entfernung oder Weglassung der Spiegelschicht zur Ausbildung des Fensters zwangsläufig einen "blinden Fleck" in der Spiegelschicht zur Folge hat, wo diese nicht mehr reflektiert. Bei der Anordnung einer Mehrzahl von Anzeigeelementen (z.B. einem LED-Band mit mehreren LEDs für eine Rangierhilfe oder einen Abstandswarner) und/oder anderen, gegebenenfalls zusätzlichen Anzeigeelementen muß eine entsprechend große Fläche und/oder müssen entsprechend mehrere Flächen oder Fenster in der Spiegelschicht ausgespart werden. Hierdurch verschlechtert sich die Abbildungsqualität des Spiegels unter Umständen ganz erheblich. Wichtige Teile des Spiegelbildes, z.B. bestimmte Orientierungspunkte am Fahrzeug oder der Umgebung beim Rangieren können sich unter Umständen dann plötzlich in so einem blinden Fleck befinden, so daß die Fahr- und Rangiersicherheit beeinträchtigt sind. Auch können andere Verkehrsteilnehmer, z.B. Radfahrer sich in so einem blinden Fleck befinden und dann nicht wahrgenommen werden. Zusätzlich sind diese nicht reflektierenden Fenster oder Flächen in der Spiegelschicht als schwarze Flecken sichtbar, was unschön wirkt.

Die vorliegende Erfindung hat es sich angesichts dieser Problematik zur Aufgabe gemacht, einen Rückspiegel zu schaffen, der es dem Fahrer eines Fahrzeugs ermöglicht, außer der vom Spiegelbild vermittelten Information zusätzliche Informationen aufzunehmen, ohne den Blick von dem Spiegel abwenden zu müssen, wobei die Informationsvermittlung durch das wenigstens eine Anzeigeelement einerseits und die Darstellungsqualität des Spiegelbildes andererseits weitestgehend unbeeinträchtigt sind.

Zur Lösung dieser Aufgabe schlägt die vorliegende Erfindung gemäß Anspruch 1 einen Rückspiegel, insbesondere für Kraftfahrzeuge vor, mit einer Spiegelscheibe, wobei in Draufsichtrichtung hinter der Spiegelscheibe wenigstens ein strahlungsemittierendes Anzeigeelement angeordnet ist, welches durch die Spiegelscheibe emittiert, wobei weiterhin die Spiegelschicht der Spiegelscheibe in einem vor dem Anzeigeelement liegenden, von diesem durchstrahlten Bereich entfernt ist. Weiterhin ist erfindungsgemäß die Spiegelschicht der Spiegelscheibe vor dem Anzeigeelement in einer Vielzahl von diskreten Bereichen entfernt oder zumindest in ihrer Schichtdicke verringert.

Es ergeben sich somit in dem von dem Anzeigeelement durchstrahlten Bereich diskrete, für die Strahlung des Anzeigeelementes völlig oder weitestgehend durchlässige, in Draufsichtrichtung nicht oder nicht hoch reflektierende Abschnitte, die sich mit solchen abwechseln, welche für die Strahlung des Anzeigeelementes praktisch undurchlässig und in Draufsichtrichtung hoch oder stark reflektierend sind.

Beim Gegenstand der vorliegenden Erfindung wird zunächst ein strahlungsemittierendes Anzeigeelement hinter der Spiegelscheibe angeordnet, wobei dieses Anzeigeelement durch die Spiegelscheibe hindurch seine Strahlung emittiert. Dieses Anzeigeelement liegt somit für einen sich vor dem Spiegel befindlichen Betrachter quasi in der Spiegelebene und die von dem Anzeigeelement vermittelte Information erscheint durch die Spiegelscheibe hindurch "in" dem Spiegelbild, welches auf der Spiegelscheibe wiedergegeben wird. Hierdurch ist es möglich, beispielsweise das oder die Anzeigeelemente einer Rückfahrhilfe nach der Lehre der vorliegenden Erfindung hinter der Spiegelscheibe anzuordnen, wobei dann diese Anzeigeelemente ihre entsprechenden Informationen durch die Spiegelscheibe hindurch in das sich auf der Spiegelscheibe darstellende Spiegelbild "einblenden". Der Betrachter erhält somit auf einen Blick sowohl Informationen bezüglich des Spiegelbildes in oder auf der Spiegelscheibe, als auch Informationen von dem oder den Anzeigeelementen. Der Blick des Fahrers muß somit nicht mehr zwischen dem Spiegel und einer getrennten Anzeigevorrichtung, beispielsweise im Armaturenbrett hin- und herwandern, sondern er bleibt beispielsweise während des Rückwärtsfahr-Manövers auf den Spiegel gerichtet, da hier sämtliche für den Rückwärtsfahrvorgang notwendigen Informationen auf einen Blick vermittelt werden. Präziseres und ermüdungsfreieres Fahren ist hierdurch möglich.

Aufgrund der Tatsache, daß das oder die Anzeigeelemente hinter der Spiegelscheibe angeordnet sind und somit durch die Spiegelschicht der Spiegelscheibe emittieren müssen, ergibt sich zwar einerseits der Vorteil, daß das von dem oder den Anzeigeelementen erzeugte Anzeigebild quasi direkt in dem auf der Spiegelfläche dargestellten Spiegelbild erscheint, wobei darüberhinaus das oder die Anzeigeelemente durch die Spiegelscheibe und das Spiegelgehäuse vor Witterungs- und Umwelteinflüssen geschützt sind, jedoch entsteht aufgrund der Emission durch die Spiegelschicht hindurch eine Abschwächung der beim Betrachter ankommenden Strahlungsleistung. Bei ungünstigen Lichtverhältnissen kann dies unter Umständen dazu führen, daß das von dem oder den Anzeigeelementen abgegebene Licht in der Spiegelfläche des Rückspiegels nicht oder nur noch sehr schlecht erkennbar oder ablesbar ist. Daher wird die Spiegelschicht der Spiegelscheibe in einem Bereich vor dem Anzeigeelement entfernt. Das oder die Anzeigeelemente können somit weitestgehend ungehindert durch das transparente oder durchsichtige Material der Spiegelscheibe hindurch ihre Strahlung abgeben, so daß die Strahlungsleistung nur unwesentlich geschwächt wird. Im Gegensatz zu bisherigen Lösungsansätzen wird aber die Spiegelschicht nicht vollflächig, d.h. fensterartig vor dem Anzeigeelement entfernt, sondern die Spiegelschicht der Spiegelscheibe wird vor dem Anzeigeelement in einer Vielzahl von diskreten Bereichen entfernt oder zumindest in ihrer Schichtdicke verringert. Hierdurch werden diskrete, für die Strahlung des Anzeigeelementes völlig oder weitestgehend durchlässige, in Draufsichtrichtung nicht oder nicht hoch reflektierende Abschnitte gebildet, die sich mit solchen abwechseln, welche für die Strahlung des Anzeigeelementes nicht oder weitestgehend undurchlässig und in Draufsichtrichtung reflektierend sind. Hierdurch ergibt sich der wesentliche Vorteil, daß die Informationsvermittlung durch das wenigstens eine Anzeigeelement einerseits und die Darstellungsqualität des Spiegelbildes andererseits weitestgehend unbeeinträchtigt sind und quasi gleichzeitig nebeneinander existieren können: das Anzeigeelement befindet sich in unmittelbarer Nähe hinter dem durchstrahlten Bereich in der Spiegelfläche. Hierdurch gelangt ein ausreichender Anteil der emittierten Strahlung durch die diskreten, für die Strahlung des Anzeigeelementes völlig oder weitestgehend durchlässigen Abschnitte, so daß die Strahlung z.B. in Form von Licht beliebiger Wellenlänge visuell feststellbar, d.h. "in" der Spiegelfläche sichtbar ist. Das Auge des Betrachters befindet sich jedoch gleichzeitig in einem gewissen Abstand zu der Spiegelfläche, der in aller Regel zumindest 1 m betragen dürfte. Werden die einzelnen diskreten Abschnitte mit und ohne Durchlässigkeit für Strahlung von dem Anzeigeelement bzw. ohne und mit Reflexionsvermögen für das Auge des Betrachters hinreichend klein (flächenmäßig betrachtet) und eng benachbart ausgestaltet, so vermag das menschliche Auge diese sich abwechselnden Abschnitte aus dieser Entfernung nicht mehr aufzulösen - insbesondere dann, wenn die nach wie vor reflektierenden oder spiegelnden Abschnitte in dem betreffenden, von dem Anzeigeeelement durchstrahlten Bereich flächenmäßig gegenüber den für die Strahlung durchlässigen Bereichen überwiegen, stellt sich für den Betrachter die Spiegelfläche weitestgehend ungestört, ohne "blinde Flecke" oder schwarze Flecke dar, mit über die gesamte Spiegelfläche hinweg gesehen unbeeinträchtigtem Spiegelabbildungsvermögen. Es besteht keine Gefahr, daß Gegenstände oder Personen, welche zufällig auf dem vom Anzeigeelelement durchstrahlten Bereich der Spiegelfläche abgebildet werden, in einem blinden Fleck verschwinden, d.h. nicht als Spiegelbild abgebildet werden.

Die Entfernung der Spiegelschicht erfolgt gemäß einer bevorzugten Ausführungsform entweder in Form von dünnen, zueinander im wesentlichen parallelen Streifen oder in Form von einzelnen kleinen Punkten oder gegebenenfalls auch in Form eines der Größe der strahlungsemittierenden Fläche des Anzeigeelementes im wesentlichen entsprechenden Punktes. Letzteres ist unter Umständen dann anwendbar, wenn das Anzeigelelement eine sehr kleine Abstrahlungsfläche hat und der Durchlässigkeitsabschnitt in der Spiegelfläche entsprechend klein gemacht werden kann. Insbesondere dann, wenn die Spiegelschicht in Form sehr dünner, zueinander im wesentlichen paralleler Streifen oder in Form von einzelnen kleinen Punkten vor dem Anzeigeelement entfernt wird, ist diese Abtragung oder Entfernung der Spiegelschicht ab einem gewissen Beobachtungsabstand im wesentlichen nicht mehr sichtbar und beeinträchtigt die Darstellung des Spiegelbildes im Rückspiegel somit im wesentlichen nicht. Eine weitere Möglichkeit ist, die Spiegelschicht derart abzutragen, daß sich bestimmte Symbole oder sog. Pictogramme ergeben, die dann aufleuchten, wenn eines oder mehrere zugeordnete Anzeigeelemente dahinter eingeschaltet werden. Eine Verringerung der Spiegelschicht-Dicke, wie es die vorliegende Erfindung ebenfalls vorschlägt, und welche durchaus ausreichend sein kann, hinreichende Durchlässigkeit für die vom Anzeigeeelement ausgehende Strahlung einerseits bei weitestgehend ungestörtem Reflexionsvermögen für einen Betrachter andererseits zu schaffen, kann beispielsweise durch einen gesteuerten Ätzvorgang, Feinschleifen etc. erfolgen, um einen bestimmten Betrag der Schichtdicke bis auf einen Restanteil zu entfernen, der dann ein geeignetes oder gewünschtes Transmissions/Reflexionsverhältnis hat.

Die direkte oder völlige Entfernung oder Abtragung der Spiegelschicht zur Ausbildung von Streifen, Punkten oder Mustern kann beispielsweise durch einen Präzisionslaser, durch einen Ätzvorgang, durch einen Ritzvorgang, durch Sandstrahlen oder eine Maskierung beim Aufbringen der Spiegelschicht erfolgen.

Das Anzeigeelement kann entweder Licht im sichtbaren Bereich oder im infraroten Bereich emittieren. In der Praxis wird die Emission von Licht im sichtbaren Bereich in der überwiegenden Mehrzahl der Fälle angewendet werden, da hiermit eine unmittelbare optische Anzeige möglich ist. Für bestimmte Anwendungsfälle kann jedoch auch eine Emission im infraroten Bereich von Interesse sein, beispielsweise für eine mit dem bloßen Auge nicht sichtbare Informationsübertragung oder Codierung zwischen dem Fahrzeug und einer stationären Überwachungs- oder Registrieranlage, beispielsweise an Werkstoren. In diesem Zusammenhang sei darauf hingewiesen, daß der Gegenstand der vorliegenden Erfindung auf die Anbringung von strahlungsemittierenden Anzeigeelementen allgemein hinter der Spiegelscheibe gerichtet ist; eine direkte visuelle Informationsübermittlung an den Fahrer mittels dieser Anzeigeelemente ist nur eine mögliche und besonders bevorzugte Anwendung des Erfindungsgedankens.

Bevorzugt wird gemäß einer weiteren Ausgestaltungsform eine Mehrzahl von lichtemittierenden Anzeigeelementen in Gruppen hinter der Spiegelscheibe angeordnet. Hierdurch ist es möglich, auch komplexere Informationen, beispielsweise einen abnehmenden Abstand zwischen der Fahrzeughinterkante und einem Hindernis oder Rangierziel anzuzeigen. Vorstellbar ist beispielsweise eine längere Reihe von nebeneinander angeordneten Anzeigeelementen, von denen eines nach dem anderen entweder erlischt oder aufleuchtet, wenn sich die Hinterkante des Fahrzeugs einem Hindernis oder Rangierziel nähert, so daß nach erfolgter Annäherung bis auf einen Minimalabstand entweder sämtliche Anzeigeelemente erloschen sind oder in Form eines Lichtbalkens leuchten. Eine weitere Möglichkeit der Informationsdarstellung wäre ein blinkendes Anzeigeelement, dessen Blinkfrequenz direkt vom Abstand zu dem Hindernis oder dem Rangierziel abhängt.

Bevorzugt sind die Anzeigeelemente Leuchtdioden, insbesondere Hochleistungs-Leuchtdioden. Leuchtdioden sind bevorzugt aufgrund ihrer geringen Größe, ihres geringen Leistungsbedarfs, ihrer hohen Lebensdauer, ihrer Unempfindlichkeit gegenüber Erschütterungen und ihrer Verfügbarkeit in unterschiedlichsten Abmessungen und Formen. Ein weiterer Vorteil wird dann erhalten, wenn gemäß einer weiteren Ausgestaltungsform die Leuchtdioden verschiedenfarbig sind. Hierdurch kann der Informationsgehalt, der über den Rückspiegel vermittelbar ist, noch weiter erhöht werden.

Anstelle von oder zusätzlich zu beispielsweise Leuchtdioden kann das oder können die Anzeigeelemente eine oder mehrere Siebensegmentanzeigen sein. Hierdurch ist es möglich, beispielsweise den Abstand von der Hinterkante des Fahrzeuges zu einem Hindernis oder Rangierziel direkt analog in Metern und Zentimetern anzuzeigen. Auch andere Informationen, beispielsweise die Außentemperatur, der Abstand zu einem vorausfahrenden Fahrzeug, eine eingeschaltete Spiegelheizung, eine Memory-Funktion für den Spiegel-Verstellmotor, Fahrtrichtungsanzeigen ("Blinker"), der Aufenthalt von Personen im "toten Winkelbereich", welche über entsprechende Sensoren erfaßt werden oder dergleichen können so angezeigt werden.

Um eventuelle Abstrahlungen oder einen Lichthof um den eigentlichen Lichtpunkt oder Lichtaustrittsbereich herum zu verhindern, kann die Rückseite des Spiegels mit Ausnahme des durchsichtig oder strahlungsdurchlässigen Teils mit beispielsweise einer Lackschicht abgedeckt sein.

Die Strahlungsrichtung des strahlungsemittierenden Anzeigeelements kann schräg von einem Betrachter weg oder zu diesem hin gerichtet sein, so daß das Anzeigeelement aus unterschiedlichen Richtungen unterschiedlich stark oder hell erscheint, also deutlich oder weniger deutlich bzw. gar nicht zu sehen ist. Die Strahlungsrichtung des strahlungsemittierenden Anzeigeelements kann hierbei durch in das Material der Spiegelscheibe eingeschliffene oder hieran befestigte Linsen gerichtet werden.

Weitere Einzelheiten, Aspekte und Vorteile der vorliegenden Erfindung ergeben sich aus der nachfolgenden Beschreibung von Ausführungsformen anhand der Zeichnung.

Es zeigt:
Fig. 1 eine vereinfachte seitliche Schnittdarstellung durch einen erfindungsgemäßen Rückspiegel mit einem hinter der Spiegelscheibe angeordneten Anzeigeelement;
Fig. 2 eine Ansicht von vorne auf eine Spiegelscheibe mit Anordnungs- bzw. Ausführungsmöglichkeiten von Anzeigeelementen; und
Fig. 3 eine seitliche schnittdarstellung durch eine in die Spiegelscheibe eingeschliffene Linse.

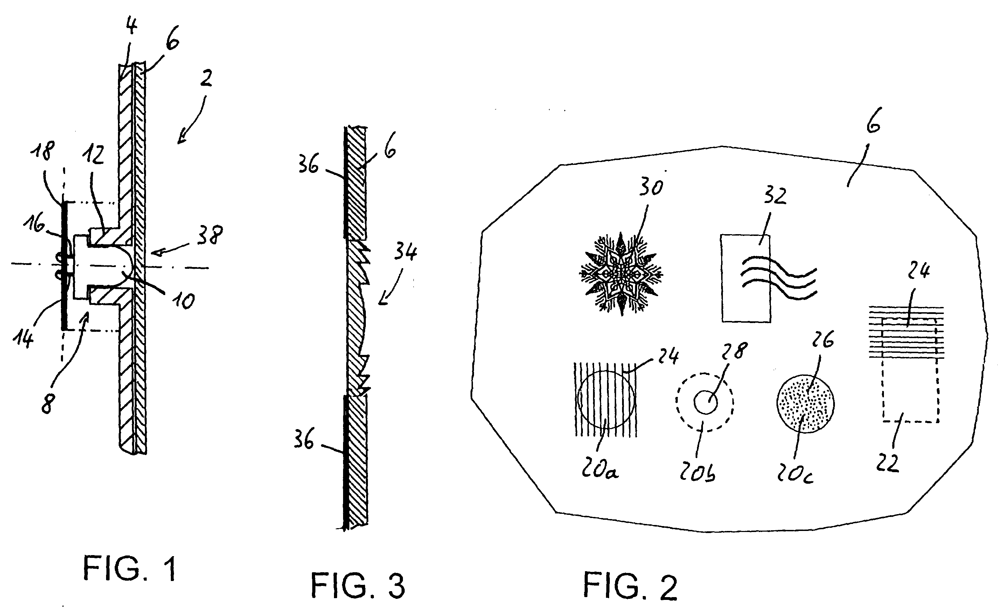

Ein in der Zeichnung insgesamt mit 2 bezeichneter Rückspiegel weist den aus der Schnittdarstellung von Fig. 1 ersichtlichen Schichtaufbau mit einer Trägerplatte 4 und einer an der Trägerplatte 4 befestigten Spiegelscheibe 6 auf. Der Rückspiegel 2 ist in der Ausführungsform gemäß Fig. 1 als sogenannter Vorderflächenspiegel ausgebildet, d.h., die Spiegelscheibe 6 weist die spiegelnde Beschichtung oder den spiegelnden Überzug nicht auf der der Trägerplatte 4 zugewandten Oberfläche, sondern auf der freien Außenoberfläche auf. Ein Beispiel für eine derartige Spiegelscheibe 6 ist eine Spiegelscheibe aus sogenanntem Chrom-Glas.

Die Trägerplatte 4 dient zur Aufnahme wenigstens eines, oder bevorzugt einer Mehrzahl von hinter der Spiegelscheibe 6 und damit im Inneren des Rückspiegels 2 liegenden Anzeigeelementen 8. In Fig. 1 ist das Anzeigeelement 8 in Form einer Leuchtdiode oder LED 10 ausgebildet. Zum Festlegen der LED 10 weist die Trägerplatte 4 einen der Außenkontur der LED 10 angepaßten Sockel 12 auf, in welchen die LED 10 eingesetzt und gegebenenfalls verklebt ist. Im Bereich des Sockels 12 ist die Trägerplatte 4 unterbrochen, so daß die LED 10 direkt hinter der Spiegelscheibe 6 zu liegen kommt. Die Anschlußbeine 14 und 16 der LED 10 sind in einer Platine 18 festgelötet, welche die notwendigen Versorgungsund Ansteuerleitungen aufweist. Bevorzugt ist die Platine 18 in Form einer sogenannten Schaltkreiskarte aufgebaut. Die Platine 18 kann sich beispielsweise an der Trägerplatte abstützen, wie in Fig. 1 durch die Strichdoppelpunkt-Linie angedeutet ist. Falls notwendig oder gewünscht, kann sich zwischen der Vorderseite oder dem vorderen Ende der LED 10 und der Rückseite der Spiegelscheibe 6 noch eine Fokussierlinse befinden, welche dann dafür sorgt, daß von der LED 10 emittiertes Licht im wesentlichen senkrecht auf die Rückseite der Spiegelseite 6 auftrifft, so daß weniger Brechung und Reflexion und damit höhere Lichtausbeute möglich ist. Weiterhin erlaubt eine derartige Fokussierlinse eine Bündelung und damit Intensivierung des von der LED 10 abgegebenen, durch die Spiegelscheibe 6 hindurchtretenden Lichts.

Die Strahlungsrichtung des strahlungsemittierenden Anzeigeelements kann auch schräg von einem Betrachter weg oder zu diesem hin gerichtet sein, so daß das Anzeigeelement aus unterschiedlichen Richtungen unterschiedlich stark oder hell erscheint, also deutlich oder weniger deutlich bzw. gar nicht zu sehen ist und andere Personen, z.B. Beifahrer nicht stört. Die Strahlungsrichtung des strahlungsemittierenden Anzeigeelements kann hierbei durch eine oder mehrere in das Material der Spiegelscheibe eingeschliffene oder hieran befestigte Linsen gerichtet werden.

Anstelle der einstückigen Ausbildung des Sockels 12 an der Trägerplatte 4 kann dieser ein separates Bauteil sein, welches auf der Trägerplatte aufgeklipst oder angeklebt oder sonstwie befestigt wird. Auch kann bei einer entsprechenden Ausgestaltung des strahlungsemittierenden Anzeigeelements dieses direkt auf die Rückseite der Spiegelscheibe geklebt werden.

Fig. 2 zeigt eine Ansicht von vorne auf einen Ausschnitt des erfindungsgemäßen Rückspiegels 2 mit der Spiegelscheibe 6. Im in Fig. 2 dargestellten Ausführungsbeispiel sind insgesamt drei LEDs oder Anzeigeelemente 20a, 20b und 20c dargestellt, welche nebeneinander liegen. Fig. 2 zeigt weiterhin die Möglichkeit, anstelle einer LED oder eines Anzeigelämpchens eine sogenannte Siebensegmentanzeige 22 hinter der Spiegelscheibe 6 anzuordnen, welche dann ebenfalls durch das Material der Spiegelscheibe 6 hindurch abstrahlt. Durch die Anordnung einer Mehrzahl von LEDs und/oder einer Mehrzahl von Siebensegmentanzeigen lassen sich auch komplexe Nachrichten oder Informationen in der Fläche der Spiegelscheibe 6 darstellten. Verstärken läßt sich dieser Effekt dadurch, daß verschiedenfarbige LEDs oder Anzeigelämpchen verwendet werden, beispielsweise in den Farben grün, gelb und rot.

Weiterhin können die Anzeigeelemente gruppenweise in der Fläche der Spiegelscheibe 6 zusammengefaßt oder angeordnet werden, um bestimmte Informationen oder Anzeigen noch deutlicher zu machen.

Anstelle von lichtemittierende Anzeigeelementen, d.h. Anzeigeelementen, die Licht im sichtbaren Bereich emittieren, kann es für bestimmte Anwendungsfälle - wie weiter oben bereits erläutert - vorteilhaft sein, Anzeigeelemente zu verwenden, welche im infraroten Bereich emittieren, also beispielsweise sogenannte IR-Dioden. Beispielsweise ist die Verwendung von LEDs im IR-Bereich dann von Vorteil, wenn eine Kamera zum Einsatz gelangt, welche außen an dem Fahrzeug angebracht ist und bestimmte, vom Fahrer nicht einsehbare tote Winkel außen am Fahrzeug überwacht. IR-Dioden zusammen mit einer IR-empfindlichen Kamera erlauben eine Überwachung oder Bilddarstellung ohne Beeinträchtigung der Umgebung z.B. durch Blendung. In diesem Zusammenhang sei auf die parallele deutsche Patentanmeldung 199 02 486.3 der selben Anmelderin mit dem Titel "Rückspiegel" verwiesen, in der eine besonders vorteilhafte Anordnung einer derartigen Kamera beschrieben ist. Auf den dortigen Offenbarungsgehalt wird hier insofern vollinhaltlich Bezug genommen.

Aufgrund des Strahldurchtritts ausgehend von dem Anzeigeelement 8 durch das Material der Spiegelscheibe 6 und deren Spiegelschicht hindurch würde eine gewisse Abschwächung des vom Anzeigeelement 8 emittierten Lichts oder der vom Anzeigeelement emittierten Strahlung erfolgen. Somit ist erfindungsgemäß die Spiegelschicht der Spiegelscheibe 6 in einem Bereich vor dem Anzeigeelement 8 zumindest teilweise derart entfernt, daß in dem von dem Anzeigeelement durchstrahlten Bereich der Spiegelscheibe 6 bzw. diskrete, für die Strahlung des Anzeigeelementes 8 völlig oder weitestgehend durchlässige, in Draufsichtrichtung nicht oder nicht hoch reflektierende Abschnitte sich mit solchen abwechseln, welche für die Strahlung des Anzeigeelementes 8 völlig oder weitestgehend undurchlässig und in Draufsichtrichtung (noch) reflektierend sind. "Weitestgehend durchlässig" für die Strahlung von dem Anzeigeelement und "(noch) reflektierend" für den Betrachter können die Abschnitte dadurch gemacht werden, daß die Spiegelschicht nicht vollständig entfernt, sondern in ihrer Schichtdicke geeignet vermindert wird. Insbesondere das Gesamt-Reflexionsverhalten der Spiegelfläche wird hierdurch weitestgehend unbeeinträchtigt.

Fig. 2 zeigt insgesamt fünf exemplarische Möglichkeiten, wie die Spiegelschicht der Spiegelscheibe 6 vor dem Anzeigeelement 8 entfernt (oder verdünnt, d.h. in ihrer Schichtdicke verringert) werden kann: Im Falle des Anzeigeelementes oder der LED 20a ist die Spiegelschicht in Form von sehr dünnen, zueinander im wesentlichen parallelen Streifen 24 entfernt. Diese Streifen 24 können horizontal, diagonal, vertikal, in parallelen Zickzack- oder Wellenlinien oder sonstwie verlaufen und liegen vor dem Anzeigeelement oder der LED 20a. Durch die Entfernung oder Verdünnung der Spiegelschicht in Form der sehr dünnen oder feinen Streifen 24 kann einerseits ein deutlich höherer Anteil der vom Anzeigeelement 8 emittierten Strahlung nach außen hin austreten, andererseits wird jedoch der Spiegelcharakter der Spiegelscheibe 6 nur unwesentlich beeinflußt.

Ein gleicher oder ähnlicher Effekt läßt sich dadurch erzielen, daß die Spiegelschicht in Form einer Mehrzahl von einzelnen kleinen Punkten 26 entfernt oder verdünnt ist, wie dies in Fig. 2 bei der LED 20c angedeutet ist.

Eine weitere Möglichkeit der Entfernung oder Verdünnung der Spiegelschicht wäre, diese in Form eines der Größe der strahlungsemittierenden Fläche des Anzeigeelementes im wesentlichen entsprechenden Punktes 28 zu entfernen oder zu verdünnen. Da die Größe des Punktes 28 im wesentlichen nur der Größe der strahlungsemittierenden Fläche des Anzeigeelementes (LED 20b) entspricht, wird durch diese Vorgehensweise die Fläche der Spiegelscheibe 6 ebenfalls nur unwesentlich beeinflußt, insbesondere dann, wenn diese strahlungsemittierende Fläche sehr klein ist, wie dies bei Punkt-LEDs der Fall ist und wenn nur eine Verdünnung der Spiegelschicht erfolgt.

Auch vor der Siebensegmentanzeige 22 oder der Mehrzahl von Siebensegmentanzeigen können beispielsweise Streifen 24 oder Punkte 26 in der Spiegelschicht ausgebildet werden, um die Durchlässigkeit der Spiegelscheibe bzw. Spiegelschicht zu erhöhen.

Weiterhin kann die Spiegelschicht in Form von Symbolen oder Pictogrammen entfernt oder verdünnt werden. Als Beispiele seien hier ein Symbol 30 als Eiswarnung und ein Symbol 32 für die Spiegelheizung in Fig. 2 genannt.

Die Ausbildung der Streifen oder Punkte 24, 26 und 28 kann beispielsweise durch einen Laser, durch einen Ätzvorgang, durch Sandstrahlen, durch Ritzen, Feinschleifen oder auch durch eine entsprechende Maskierung bei der Aufbringung der Spiegelschicht auf die Spiegelscheibe 6 erfolgen.

Das Anzeigeelement oder die Anzeigeelemente können mit einer gemeinsamen oder separat wirkenden Dimmerfunktion ausgestattet werden, um den jeweils optimalen oder gewünschten Helligkeitsgrad einstellen zu können.

Die Strahlungsrichtung des strahlungsemittierenden Anzeigeelements kann bei Bedarf schräg von einem Betrachter weg oder zu diesem hin gerichtet sein, so daß das Anzeigeelement aus unterschiedlichen Richtungen unterschiedlich stark oder hell erscheint, also deutlich oder weniger deutlich bzw. gar nicht zu sehen ist und andere Personen, z.B. Beifahrer nicht stört. Die Strahlungsrichtung des strahlungsemittierenden Anzeigeelements kann hierbei durch in das Material der Spiegelscheibe eingeschliffene oder hieran befestigte Linsen gerichtet werden. Fig. 3 zeigt ein Beispiel einer eingeschliffenen Linse 34.

Um eventuelle Abstrahlungen oder einen Lichthof um den eigentlichen Lichtpunkt oder Lichtaustrittsbereich herum zu verhindern, kann die Rückseite der Spiegelscheibe 6 mit Ausnahme des durchsichtigen oder strahlungsdurchlässigen Teils mit beispielsweise einer Lackschicht 36 abgedeckt sein. Fig. 3 zeigt die Anordnung der Lackschicht 36 um die Linse 34 herum. Im Falle von Fig. 1 wäre die Lackschicht 36 zwischen der Trägerplatte 4 und der Spiegelscheibe 6 um den Sockel 12 bzw. eine durch den Sockel 12 definierte Lichtoder Strahlungsaustrittsöffnung 38 herum aufgebracht.

Durch den Gegenstand der vorliegenden Erfindung ist es möglich, Informationen in das im Rückspiegel vorhandene Spiegelbild quasi einzublenden. Beispielsweise im Falle einer Rückfahrhilfe erhält der Fahrer beim Rückwärtsrangieren, wobei er ohnehin den oder die Rückspiegel seines Fahrzeuges benutzt, gleichzeitig Informationen von der Rückfahrhilfe betreffend den Abstand zu einem Hindernis oder dem Rangierziel, so daß der Blick des Fahrers nicht ständig zwischen dem Rückspiegel und der Rückfahrhilfe-Anzeige am Instrumentenbrett hin- und herwandern muß. Auch lassen sich andere Informationen darstellen, beispielsweise Außentemperatur etc. Weiterhin können Warn- oder Hinweissignale in die Fläche des Rückspiegels 2 eingeblendet werden. Die Einblendung der Anzeige(n) beeinträchtigt hierbei die Wahrnehmung von Gegenständen oder Personen im Spiegel so gut wie nicht.

Da die Anzeigeelemente 8 hinter der Spiegelscheibe 6 und der Trägerplatte 4 liegen, sind sie vor Verschmutzungen und Umwelteinflüssen zuverlässig geschützt.

## Patentansprüche

1. Rückspiegel, insbesondere für Kraftfahrzeuge, mit einer Spiegelscheibe (6), wobei in Draufsichtrichtung hinter der Spiegelscheibe (6) wenigstens ein strahlungsemittierendes Anzeigeelement (8) angeordnet ist, welches durch die Spiegelscheibe (6) emittiert, wobei weiterhin die Spiegelschicht der Spiegelscheibe (6) in einem vor dem Anzeigeelement (8) liegenden, von diesem durchstrahlten Bereich (38) entfernt ist,
dadurch gekennzeichnet, daß
die Spiegelschicht der Spiegelscheibe (6) vor dem Anzeigeelement (8) in einer Vielzahl von diskreten Bereichen entfernt oder zumindest in ihrer Schichtdicke verringert ist.

2. Rückspiegel nach Anspruch 1, dadurch gekennzeichnet, daß die Spiegelschicht der Spiegelscheibe (6) vor dem Anzeigeelement (8) in Form von dünnen, zueinander im wesentlichen parallelen Streifen (24) entfernt ist.

3. Rückspiegel nach Anspruch 1, dadurch gekennzeichnet, daß die Spiegelschicht der Spiegelscheibe (6) vor dem Anzeigeelement in Form von einzelnen kleinen Punkten (26) entfernt ist.

4. Rückspiegel nach Anspruch 1, dadurch gekennzeichnet, daß die Spiegelschicht der Spiegelscheibe (6) vor dem Anzeigeelement (8) in Form eines der Größe der strahlungsemittierenden Fläche des Anzeigeelements (8) im wesentlichen entsprechenden Punktes (28) entfernt ist.

5. Rückspiegel nach Anspruch 1, dadurch gekennzeichnet, daß die Spiegelschicht der Spiegelscheibe (6) vor dem Anzeigeelement (8) in Form eines Symboles oder Pictogrammes (30, 32) entfernt ist.

6. Rückspiegel nach einem oder mehreren der Ansprüche 1 bis 5, dadurch gekennzeichnet, daß die Spiegelschicht durch einen Laser abgetragen wird.

7. Rückspiegel nach einem oder mehreren der Ansprüche 1 bis 5, dadurch gekennzeichnet, daß die Spiegelschicht durch einen Ätzvorgang abgetragen wird.

8. Rückspiegel nach einem oder mehreren der Ansprüche 1 bis 5, dadurch gekennzeichnet, daß die Spiegelschicht durch einen Ritzvorgang abgetragen wird.

9. Rückspiegel nach einem oder mehreren der Ansprüche 1 bis 5, dadurch gekennzeichnet, daß die Spiegelschicht durch einen Sandstrahlvorgang abgetragen wird.

10. Rückspiegel nach einem oder mehreren der Ansprüche 1 bis 9, dadurch gekennzeichnet, daß das wenigstens eine Anzeigeelement (8) Licht im sichtbaren Bereich emittiert.

11. Rückspiegel nach einem oder mehreren der Ansprüche 1 bis 9, dadurch gekennzeichnet, daß das wenigstens eine Anzeigeelement (8) Licht im infraroten Bereich emittiert.

12. Rückspiegel nach einem oder mehreren der Ansprüche 1 bis 11, dadurch gekennzeichnet, daß eine Mehrzahl von strahlungsemittierenden Anzeigeelementen (8) hinter der Spiegelscheibe (6) angeordnet ist.

13. Rückspiegel nach Anspruch 12, dadurch gekennzeichnet, daß die strahlungsemittierenden Anzeigeelemente (8) Leuchtdioden (10, 20a, 20b, 20c), insbesondere Hochleistungs-Leuchtdioden sind.

14. Rückspiegel nach Anspruch 13, dadurch gekennzeichnet, daß die Leuchtdioden (10, 20a, 20b, 20c) verschiedenfarbig sind.

15. Rückspiegel nach einem oder mehreren der Ansprüche 1 bis 12, dadurch gekennzeichnet, daß das strahlungsemittierende Anzeigeelement (8) eine Siebensegmentanzeige (22) ist.

16. Rückspiegel nach einem oder mehreren der Ansprüche 1 bis 15, dadurch gekennzeichnet, daß die dem strahlungsemittierenden Anzeigeelement (8) zugewandte Seite der Spiegelscheibe (6) mit Ausnahme des von dem Anzeigeelement durchstrahlten Bereichs (38) licht- oder strahlungsdicht abgedeckt ist.

17. Rückspiegel nach einem oder mehreren der Ansprüche 1 bis 16, dadurch gekennzeichnet, daß die Strahlungsrichtung des strahlungsemittierenden Anzeigeelements (8) schräg von einem Betrachter weg oder zu diesem hin gerichtet ist.

18. Rückspiegel nach Anspruch 17, dadurch gekennzeichnet, daß die Strahlungsrichtung des strahlungsemittierenden Anzeigeelements (8) durch wenigstens eine in das Material der Spiegelscheibe (6) eingeschliffene oder hieran befestigte Linse (34) gerichtet wird.
